# EUROPÄISCHE PATENTSCHRIFT

(11) **EP 0 888 957 B1**
(45) Veröffentlichungstag und Bekanntmachung des Hinweises auf die Patenterteilung: **04.10.2001**
(21) Anmeldenummer: 98109315.6
(22) Anmeldetag: 22.05.1998
(51) Int. Cl.: B62D 35/02

(54) **Vorrichtung zur Belüftung eines Aggregates an einem Fahrzeug**
Ventilation device for a component on a vehicle
Dispositif de ventilation pour un composant d'un véhicule

(30) Priorität: 02.07.1997 DE 19728265
(43) Veröffentlichungstag der Anmeldung: 07.01.1999
(73) Patentinhaber: Dr.Ing. h.c. F. Porsche Aktiengesellschaft, 70435 Stuttgart (DE)
(72) Erfinder: Preiss, Michael, 71665 Vaihingen (DE); Wiegand, Thomas, Dr., 70197 Stuttgart (DE)

(56) Entgegenhaltungen:
- EP-A- 0 257 341
- DE-A- 3 712 048
- DE-A- 4 319 281
- US-A- 4 486 046

## Beschreibung

Die Erfindung betrifft eine ein Aggregat belüftende Vorrichtung an einem Fahrzeug.

Zur Einhaltung von Grenztemperaturen von fahrzeugseitigen Aggregaten oder ähnlichen technischen Geräten ist es allgemein bekannt, diese im Fahrbetrieb mittels einer mit einem Luftstrom zusammenwirkenden Vorrichtung zu belüften.

Gemäß der EP 0 291 650 A1 ist zur Kühlung eines oberhalb einer Unterbodenverkleidung liegenden Aggregates an einem örtlich hochgezogenen Abschnitt der Unterbodenverkleidung eine Eintrittsöffnung vorgesehen, wobei ein benachbart der Eintrittsöffnung angeordnetes Halteelement für die Unterbodenverkleidung zugleich ein schaufelartiges Umlenkelement für den Luftstrom bildet, dergestalt, daß dieser durch seitliches Umlenken auf das zu kühlende Aggregat geleitet wird.

Bei dieser Art von Luftführung treten relativ hohe Strömungsverluste auf und es besteht keine Möglichkeit, den Luftstrom auf dem Weg zum zu belüftenden Aggregat zu beschleunigen.

Die DE-A-37 12 048 offenbart eine Vorrichtung zum Absenken des Auftriebs an Fahrzeugen mit zwei unterhalb des Fahrzeugkörpers angeordneten senkrecht stehenden Tragflügelprofilen, die einen sich annähernd in Fahrzeuglängsrichtung erstreckenden Profilquerschnitt aufweisen. Die Tragflügelprofile sind dabei an der Bodenstruktur des Fahrzeuges angeordnet. Lediglich an den außenliegenden Druckseiten beider Tragflügelprofile werden die Luftströme jeweils zur Seite hin umgelenkt, wobei durch lokale Erhöhung des Radhausinnendruckes eine verbesserte Kühlung der etwa auf gleicher Höhe wie die Tragflügelprofile angeordneten Bremsen erfolgt.

Aufgabe der Erfindung ist es, eine Vorrichtung zur Belüftung eines Aggregates an einem Fahrzeug so weiterzuentwickeln, daß die Wirksamkeit der Belüftung wesentlich verbessert wird, ohne die aerodynamischen Beiwerte (Cw, Cav, CaH) nachteilig zu beeinflussen.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung eines im Querschnitt gesehen flügelartig profilierten, mit Seitenwänden versehenen Luftführungselementes stromauf des zu belüftenden Aggregates eine wesentlich verbesserte Belüftung des Aggregates erfolgt, da durch die Ausnutzung der beiden übereinanderliegenden, sich zum Bauteil hin verjüngenden Luftführungskanäle ein größerer Luftmengenstrom mit zugleich höherer Strömungsgeschwindigkeit zum zu belüftenden Aggregat geleitet wird.

Durch das im Querschnitt gesehen flügelartige Luftführungselement erfolgt ein relativ verlustarmes Umlenken des im Fahrbetrieb auftretenden Luftstromes. Durch Kontraktion der beiden Luftführungskanäle erfolgt eine lokale Beschleunigung der Strömungsgeschwindigkeit der beiden Teilluftströme. Das flügelartige Luftführungselement wirkt quasi als Doppelbelüftungsschaufel.

Das Luftführungselement läßt sich z.B. in einfacher Weise durch Aufklipsen auf eine fahrwerkfeste Querstrebe montieren und wird im Ausführungsbeispiel zur Belüftung bzw. Kühlung eines Differentialgetriebes herangezogen. Ein am hinteren Rand der Querstrebe formschlüssig anliegendes Rundprofil sorgt für den zuverlässigen Sitz des Luftführungselements an der Querstrebe. Die Befestigung des Luftführungselementes kann an allen angrenzenden Karosserie-, Fahrwerks- oder Motorteilen erfolgen. Das Luftführungselement kann aus Metallblech oder Kunststoff hergestellt werden und weist einen einfachen Aufbau auf.

Ein Ausführungsbeispiel der Erfindung ist in den Zeichnungen dargestellt und wird im folgenden näher beschrieben.

Es zeigen
- Fig. 1: einen horizontalen Längsschnitt durch das erfindungsgemäße Luftführungselement und das nachgeschaltete zu belüftende Aggregat,
- Fig. 2: einen weiteren horizontalen Längsschnitt durch die Unterbodenverkleidung eines Fahrzeuges mit dem erfindungsgemäßen Luftführungselement und dem zu belüftenden Aggregat,
- Fig. 3: eine Ansicht von oben auf das Luftführungselement,
- Fig. 4: eine Ansicht von vorne auf das Luftführungselement und
- Fig. 5: eine Ansicht von der Seite auf das Luftführungselement.

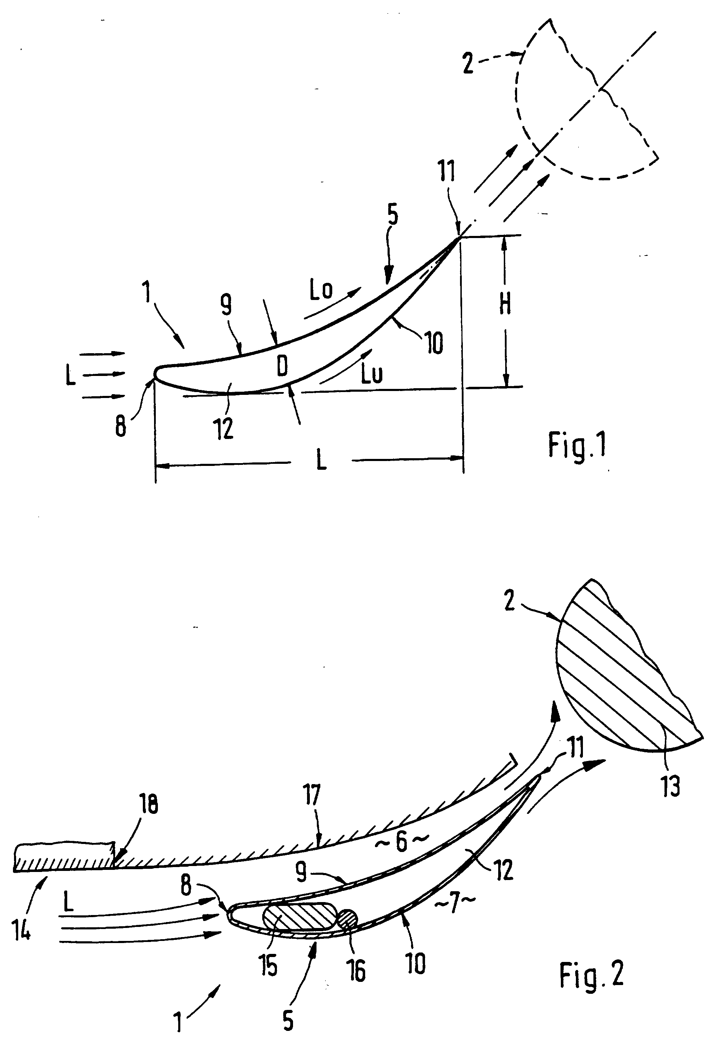

In Fig. 1 ist das Wirkprinzip einer Vorrichtung 1 zur Belüftung bzw. Kühlung eines Aggregates 2 an einem Fahrzeug näher dargestellt, wobei durch die Vorrichtung 1 die auftretende Temperatur des Aggregates 2 im Fahrbetrieb stets unterhalb einer definierten Grenztemperatur bleibt.

Erfindungsgemäß ist stromauf des zu belüftenden Aggregats 2 ein im Querschnitt gesehen flügelartig profiliertes, mit Seitenwänden 3a, 3b bzw. 4a, 4b versehenes Luftführungselement 5 angeordnet.

Das flügelartig profilierte Luftführungselement 5 ist relativ steil zu dem im Fahrbetrieb auftretenden Luftstrom L angestellt und zwar dergestalt, daß dieser im Bereich des Luftführungselementes 5 in zwei getrennte Teilluftströme Lo und Lu aufgeteilt wird, wobei der obere Teilluftstrom Lo mit einem an der Oberseite des Luftführungselementes 5 ausgebildeten oberen Luftführungskanal 6 und der untere Teilluftstrom Lu mit einem an der Unterseite des Luftführungselementes 5 ausgebildeten Luftführungskanal 7 zusammenwirkt. Nach dem Luftführungselement 5 werden die beiden Teilluftströme Lo und Lu wieder zusammengeführt.

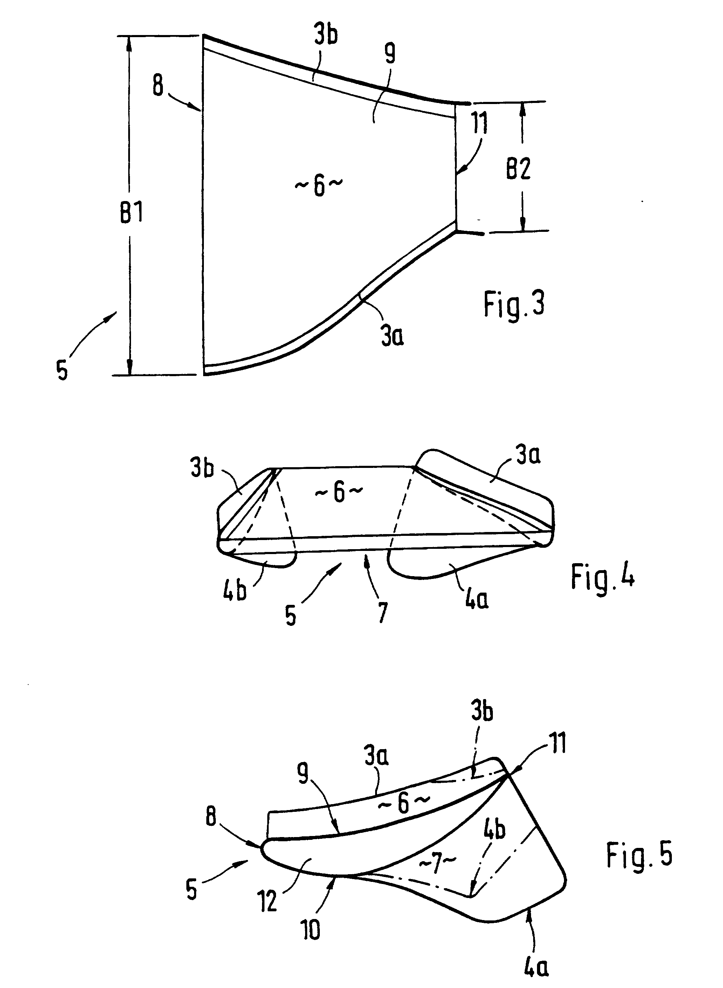

Das flügelartig profilierte Luftführungselement 5 weist - im Querschnitt gesehen - eine gerundete Vorderkante 8 auf, von der eine Oberseite 9 und eine Unterseite 10 weggeführt sind. Die Oberseite 9 ist - im Querschnitt gesehen - konkav und die Unterseite 10 konvex ausgebildet. Oberseite 9 und Unterseite 10 sind am hinteren querverlaufenden Endbereich zusammengeführt und bilden eine spitz auslaufende hintere Kante 11 des Luftführungselementes 5. Die gerundete Vorderkante 8 des Luftführungselementes 5 ist quer und vorzugsweise rechtwinkelig zum ankommenden Luftstrom L ausgerichtet. Der Radius an der Vorderkante 8 darf R = 3mm nicht unterschreiten, da ansonsten eine zu große Empfindlichkeit auf Veränderung des Anstellwinkels, z.B. in Folge von Einbautoleranzen oder Anströmrichtungsänderungen zu erwarten ist. Die spitz zulaufende hintere Kante 11 zeigt auf die Mitte des zu belüftenden Aggregates 2, dergestalt, daß die Winkelhalbierende der hinteren Kante 11 auf die Mitte des zu belüftenden Aggregats 2 weist (Fig. 1). Beide Luftführungskanäle 6, 7 des Luftführungselementes 5 weisen zum zu belüftenden Aggregat 2 hin eine Kontraktion auf und verjüngen sich - in der Draufsicht gesehenvon der gerundeten Vorderkante 8 nach hinten hin trapezförmig (Fig. 3).

Der Verlauf der oberen Seitenwände 3a, 3b des oberen Luftführungskanales 6 ist in Fig. 3 dargestellt. Die äußeren Seitenwände 3a, 4a weisen zumindest bereichsweise einen anderen Beschnitt auf als die inneren Seitenwände 3b, 4b (siehe Fig. 5). Die oberen aufrechten Seitenwände 3a, 3b sind von der Oberseite 9 des Luftführungselementes 5 und die unteren aufrechten Seitenwände 4a, 4b sind von der Unterseite 10 des Luftführungselementes 5 jeweils einstückig weggeführt. Zwischen Oberseite 9 und Unterseite 10 ist das hohl gestaltete Luftführungselement 5 zu beiden Längsseiten hin offen ausgebildet. Die Höhe der oberen Seitenwände 3a, 3b sollte etwa der maximalen Dicke D des Flügelprofils 12 entsprechen. Auf der konvexen Unterseite 10 sind die Seitenwände 4a, 4b so hoch wie aufgrund des zur Verfügung stehenden Bauraumes möglich ausgeführt.

Das dem zu belüftenden Aggregat 2 in Fahrtrichtung gesehen vorgelagerte und tieferliegende Luftführungselement 5 weist an seiner hinteren Kante 11 etwa die gleiche Breite B₂ auf wie das benachbarte zu belüftende Aggregat 2. Das Luftführungselement 5 wird im Ausführungsbeispiel zur Belüftung eines Differentialgetriebes 13 herangezogen und ist im Unterbodenbereich 14 des Fahrzeuges angeordnet. Es kann aber auch für andere Aggregate 2 verwendet werden.

Das Luftführungselement 5 ist unter Einhaltung der notwendigen Freigänge an angrenzenden Karosserie-, Fahrwerks- oder Motorteilen befestigt.

Gemäß Fig. 2 ist das Luftführungselement 5 durch Aufklipsen auf eine fahrwerkfeste Querstrebe 15 in Lage gehalten. Zur lagerichtigen Positionierung des Luftführungselementes 5 ist innenseitig an der Unterseite 10 ein Rundprofil 16 befestigt, das formschlüssig mit dem hinteren Rand der Querstrebe 15 zusammenwirkt. Die Unterseite 10 und die Oberseite 9 des Luftführungselementes 5 sind im Bereich der hinteren Kante 11 in nicht näher dargestellter Weise örtlich durch Schrauben oder dergleichen miteinander verbunden. Im Anlieferungszustand sind Oberseite 9 und Unterseite 10 im Bereich der hinteren Kante 11 auseinanderklappbar, so daß das Luftführungselement 5 von vorne einfach über die Querstrebe 15 schiebbar und mit dieser verbindbar ist.

Gemäß Fig. 2 wird die Wirksamkeit des oberen Luftführungskanals 6 dadurch verstärkt, daß oberhalb des Luftführungselementes 5 ein konvex gekrümmtes Leitblech 17 angeordnet ist. Dieses beginnt an der hinteren Unterbodenverkleidung 18 und verläuft über der konkav gekrümmten Oberseite 9 des Luftführungselements 5. Leitblech 17 und Oberseite 9 verlaufen dabei dergestalt, daß sich der Querschnitt von vorne nach hinten hin kontinuierlich verjüngt. Durch die Krümmung der Oberseite 9 und der Unterseite 10 wird der Luftstrom L verlustarm zum zu belüftenden Aggregat 2 umgelenkt. Durch die Aufteilung der Strömung über Ober- und Unterseite des Luftführungselements 5 wird ein Staupunkt auf der Vorderseite des zu belüftenden Aggregates 2 erzeugt, was zu einer Umströmung sowohl der Unterseite als auch der Oberseite des Aggregates 2 führt.

Aufgrund von Profilierung, trapezförmiger Verjüngung und mittels der Seitenwände 3a, 3b bzw. 4a, 4b wird eine kontinuierliche Erhöhung der Strömungsgeschwindigkeit des Luftstromes entlang des Luftführungselementes 5 erzielt. Die auf diese Weise erhöhte Konvektion verbessert die Wärmeabfuhr auf der Oberfläche des Aggregates 2 deutlich und erleichtert somit die Einhaltung der jeweils geforderten Grenztemperaturen. Das Luftführungselement 5 ist aus einem formstabilen und hitzebeständigen Material wie Metallblech, Kunststoff oder dergleichen hergestellt. Bei Herstellung des Luftführungselementes 5 aus Kunststoff ist eine geteilte Bauweise (2-teilig) und eine Verschraubung beider Teile von Vorteil. Die Teilung ist sowohl horizontal wie auch vertikal oder schräg möglich.

Die Vorderkante 8 des Luftführungselements 5 weist im Ausführungsbeispiel eine Breite B₁ auf, die breiter ist als die Breite B₂ der Hinterkante 11. Je größer die Breite B₁ an der Vorderkante 8 ausgeführt ist, umso größer ist der erfaßte Luftmassenstrom, der zur konvektiven Kühlung des zu belüftenden Aggregates 2 herangezogen werden kann.

In Abhängigkeit von der Länge L des Luftführungselementes 5 kann durch die kontinuierliche Verjüngung von der Vorder- zur Hinterkante (z.B. im Verhältnis 2:1) eine Kontraktion des Strömungsquerschnittes und damit eine deutliche Beschleunigung der Strömungsgeschwindigkeit erreicht werden.

Die notwendige Umlenkung des Luftstromes L wird mit Hilfe der Parameter Krümmung der Skelettlinie (Profilmittellinie) sowie der Dickenverteilung des Luftführungselementes 5 beschrieben. Mittels einer Vergrößerung der Krümmung ist (bei identischer Einbaulage und Anströmrichtung) prinzipiell eine stärkere Umlenkung zu erzielen. Dabei muß jedoch beachtet werden, daß eine Ablösung der Strömung auf der konvex gekrümmten Unterseite 10 des Luftführungselementes 5 in Folge von Konturunstetigkeiten oder zu starker Krümmung vermieden wird.

Die zur Luftführung notwendigen Seitenwände 3a, 3b bzw. 4a, 4b sollten so hoch wie möglich ausgeführt werden, um eine maximale "Kanalisationswirkung" zu erzielen. Dabei sind jedoch die Abstände von zueinander beweglichen Teilen (Motor, Getriebe, Fahrwerk, Karosserie) und im Unterbodenbereich 14 die konstruktiv festgelegte Bodenfreiheit einzuhalten.

Im Ausführungsbeispiel ist das erfindungsgemäße Luftführungselement 5 im Unterbodenbereich 14 eines Kraftfahrzeuges vorgesehen und wird zur Belüftung eines Differentialgetriebes 13 verwendet. Es besteht jedoch auch die Möglichkeit, ein derartiges Luftführungselement an Schienenfahrzeugen zur Belüftung der Bremsen oder für andere Einsatzzwecke vorzusehen.

## Patentansprüche

1. Eine ein Aggregat belüftende Vorrichtung an einem Fahrzeug, **dadurch gekennzeichnet, daß** stromauf des zu belüftenden Aggregates (2) ein im Querschnitt gesehen flügelartig profiliertes, relativ steil angestelltes Luftführungselement (5) angeordnet ist, an dem ein oberer Luftführungskanal (6) und ein unterer Luftführungskanal (7) ausgebildet sind, wobei eine Aufteilung des im Fahrbetrieb auf das Luftführungselement (5) gerichteten Luftstromes (L) auf beide Luftführungskanäle (6, 7) erfolgt.

2. Vorrichtung nach Anspruch 1, **dadurch gekennzeichnet, daß** das flügelartig profilierte Luftführungselement (5) im Querschnitt gesehen eine gerundete Vorderkante (8) aufweist, von der eine Oberseite (9) und eine Unterseite (10) weggeführt sind, wobei die Oberseite (9) konkav und die Unterseite (10) konvex ausgebildet ist.

3. Vorrichtung nach den Ansprüchen 1 und 2, **dadurch gekennzeichnet, daß** die gerundete Vorderkante (8) des Luftführungselementes (5) etwa rechtwinklig zum ankommenden Luftstrom (L) ausgerichtet ist.

4. Vorrichtung nach den Ansprüchen 1 und 2, **dadurch gekennzeichnet, daß** eine spitz zulaufende hintere Kante (11) des Luftführungselementes (5) etwa auf die Mitte des zu belüftenden Aggregates (2) zeigt.

5. Vorrichtung nach Anspruch 2, **dadurch gekennzeichnet, daß** der obere Luftführungskanal (6) durch die konkave Oberseite (9) und aufrechte, sich nach oben hin erstreckende Seitenwände (3a, 3b) gebildet wird.

6. Vorrichtung nach Anspruch 2, **dadurch gekennzeichnet, daß** der untere Luftführungskanal (7) durch die konvexe Unterseite (10) des Luftführungselementes (5) und aufrechte, sich nach unten hin erstreckende Seitenwände (4a, 4b) gebildet wird.

7. Vorrichtung nach Anspruch 5, **dadurch gekennzeichnet, daß** die Höhe der Seitenwände (3a, 3b) auf der konkaven Oberseite (9) des Luftführungselementes (5) etwa der maximalen Dicke (D) des Luftführungselementes (5) entsprechen.

8. Vorrichtung nach Anspruch 2, **dadurch gekennzeichnet, daß** sich beide Luftführungskanäle (6, 7) - in der Draufsicht gesehen - von der gerundeten Vorderkante (8) nach hinten hin trapezförmig verjüngen.

9. Vorrichtung nach einem oder mehreren der vorangegangenen Ansprüche, **dadurch gekennzeichnet, daß** das Luftführungselement (5) zwischen Oberseite (9) und Unterseite (10) hohl ausgebildet und zu beiden Längsseiten hin offen ist.

10. Vorrichtung nach einem oder mehreren der vorangegangenen Ansprüche, **dadurch gekennzeichnet, daß** die hintere Kante (11) des Luftführungselementes (5) etwa die gleiche Breite (B₂) aufweist wie das benachbart angeordnete zu belüftende Aggregat (2).

11. Vorrichtung nach einem oder mehreren der vorangegangenen Ansprüche, **dadurch gekennzeichnet, daß** das Luftführungselement (5) im Unterbodenbereich (14) des Fahrzeuges angeordnet ist und zur Belüftung eines Differentialgetriebes (13) eingesetzt ist.

12. Vorrichtung nach einem oder mehreren der vorangegangenen Ansprüche, **dadurch gekennzeichnet, daß** das Luftführungselement (5) durch Aufklipsen auf eine fahrwerksfeste Querstrebe (15) in Lage gehalten ist.

13. Vorrichtung nach Anspruch 12, **dadurch gekennzeichnet, daß** am hinteren Rand der Querstrebe (15) ein fest mit dem Luftführungselement (5) verbundenes Rundprofil (16) formschlüssig anliegt.

14. Vorrichtung nach einem oder mehreren der vorangegangenen Ansprüche, **dadurch gekennzeichnet, daß** mit Hilfe eines konvex gekrümmten Leitbleches (17), welches an der hinteren Unterbodenverkleidung (18) beginnt und über der konkav gekrümmten Oberseite (9) des Luftführungselementes (5) verläuft, die Luftleitwirkung verstärkt wird.

## Claims

1. A device ventilating a unit on a vehicle, **characterized in that** an air-guide member (5), which is profiled in the manner of a vane as viewed in cross-section and is set at a relatively steep angle and on which an upper air-guide duct (6) and a lower air-guide duct (7) are formed, is arranged upstream of the unit (2) to be ventilated, wherein the air flow (**L**) directed onto the air-guide member (5) during travel is divided into the two air-guide ducts (6, 7).

2. A device according to Claim 1, **characterized in that** the air-guide member (5) profiled in the manner of a vane has a rounded front edge (8) as viewed in cross-section, from which a top side (9) and an underside (10) extend away, wherein the top side (9) is concave and the underside (10) is convex.

3. A device according to Claims 1 and 2, **characterized in that** the rounded front edge (8) of the air-guide member (5) is orientated substantially at a right angle to the oncoming air flow (**L**).

4. A device according to Claims 1 and 2, **characterized in that** a rear edge (11) of the air-guide member (5) tapering to a point is directed substantially to the middle of the unit (2) to be ventilated.

5. A device according to Claim 2, **characterized in that** the upper-air guide duct (6) is formed by the concave top side (9) and upright lateral walls (3a, 3b) extending upwards.

6. A device according to Claim 2, **characterized in that** the lower air-guide duct (7) is formed by the convex underside (10) of the air-guide member (5) and upright lateral walls (4a, 4b) extending downwards.

7. A device according to Claim 5, **characterized in that** the height of the lateral walls (3a, 3b) on the concave top side (9) of the air-guide member (5) corresponds substantially to the maximum thickness (**D**) of the air-guide member (5).

8. A device according to Claim 2, **characterized in that** the two air-guide ducts (6, 7) taper inwardly downwards in a trapezoidal shape from the rounded front edge (8) as seen in plan view.

9. A device according to one or more of the preceding Claims, **characterized in that** the air-guide member (5) is hollow between the top side (9) and the underside (10) and is open on both longitudinal sides.

10. A device according to one or more of the preceding Claims, **characterized in that** the rear edge (11) of the air-guide member (5) has substantially the same width **(B**_{**2**}**)** as the adjacent unit (2) to be ventilated.

11. A device according to one or more of the preceding Claims, **characterized in that** the air-guide member (5) is arranged in the underfloor region (14) of the vehicle and is used to ventilate a differential gear (13).

12. A device according to one or more of the preceding Claims, **characterized in that** the air-guide member (5) is held in position by clipping onto a transverse strut (15) fixed to the chassis.

13. A device according to Claim 12, **characterized in that** a round section (16) rigidly connected to the air-guide member (5) rests against the rear edge of the transverse strut (15) with positive locking.

14. A device according to one or more of the preceding Claims, **characterized in that** the air-guiding effect is reinforced with the aid of a convexly curved baffle (17) starting at the rear underfloor lining (18) and extending over the concavely curved top side (9) of the air-guide member (5).

## Revendications

1. Dispositif ventilant un groupe sur un véhicule, **caractérisé en ce qu'**en amont du groupe (2) à ventiler est disposé un élément de guidage d'air (5) profilé à la manière d'une aile, vu en coupe transversale, et incliné relativement abruptement, sur lequel sont formés un canal supérieur (6) de guidage d'air et un canal inférieur (7) de guidage d'air, une répartition du courant d'air (L), dirigé sur l'élément de guidage d'air (5) pendant la marche, s'effectuant entre les deux canaux (6, 7) de guidage d'air.

2. Dispositif selon la revendication 1, **caractérisé en ce que** l'élément de guidage d'air (5), profilé à la manière d'une aile, présente, vu en coupe transversale, un bord avant (8) arrondi, duquel partent un côté supérieur (9) et un côté inférieur (10), le côté supérieur (9) étant concave et le côté supérieur (10) convexe.

3. Dispositif selon les revendications 1 et 2, **caractérisé en ce que** le bord avant (8) arrondi de l'élément de guidage d'air (5) est orienté à peu près perpendiculairement au courant d'air (L) arrivant.

4. Dispositif selon les revendications 1 et 2, **caractérisé en ce qu'**un bord arrière (11) se terminant en pointe de l'élément de guidage d'air (5) est dirigé approximativement vers le milieu du groupe (2) à ventiler.

5. Dispositif selon la revendication 2, **caractérisé en ce que** le canal supérieur (6) de guidage d'air est formé par le côté supérieur concave (9) et par des parois latérales (3a, 3b) verticales, qui s'étendent vers le haut.

6. Dispositif selon la revendication 2, **caractérisé en ce que** le canal inférieur (7) de guidage d'air est formé par le côté inférieur convexe (10) de l'élément de guidage d'air (5) et par des parois latérales (4a, 4b) verticales, s'étendant vers le bas.

7. Dispositif selon la revendication 5, **caractérisé en ce que** la hauteur des parois latérales (3a, 3b) sur le côté supérieur (9) concave de l'élément de guidage d'air (5) correspond approximativement à l'épaisseur maximale (D) de l'élément de guidage d'air (5).

8. Dispositif selon la revendication 2, **caractérisé en ce que** les deux canaux (6, 7) de guidage d'air - vus de dessus - se rétrécissent en forme de trapèze depuis le bord avant (8) arrondi vers l'arrière.

9. Dispositif selon une ou plusieurs des revendications précédentes, **caractérisé en ce que** l'élément de guidage d'air (5) est creux entre le côté supérieur (9) et le côté inférieur (10) et est ouvert vers les deux côtés longitudinaux.

10. Dispositif selon une ou plusieurs des revendications précédentes, **caractérisé en ce que** le bord arrière (11) de l'élément de guidage d'air (5) présente approximativement la même largeur (B2) que le groupe (2) à ventiler disposé à proximité.

11. Dispositif selon une ou plusieurs des revendications précédentes, **caractérisé en ce que** l'élément de guidage d'air (5) est disposé dans la zone (14) du dessous de caisse du véhicule et est utilisé pour ventiler un différentiel (13).

12. Dispositif selon une ou plusieurs des revendications précédentes, **caractérisé en ce que** l'élément de guidage d'air (5) est immobilisé par clipsage sur une traverse (15) solidaire du châssis.

13. Dispositif selon la revendication 12, **caractérisé en ce qu'**un profilé rond (16), relié fixement à l'élément de guidage d'air (5), s'applique par blocage mécanique contre le bord arrière de la traverse (15).

14. Dispositif selon une ou plusieurs des revendications précédentes, **caractérisé en ce qu'**on intensifie l'effet de guidage d'air à l'aide d'une tôle de guidage (17), de courbure convexe, qui commence sur l'habillage arrière (18) du dessous de caisse et qui passe au dessus du côté supérieur (9), à courbure concave, de l'élément de guidage d'air (5).
